(19) **Europäisches Patentamt**
**European Patent Office**
**Office européen des brevets**

(11) **EP 4 604 440 A1**

(12) **EUROPEAN PATENT APPLICATION**

(43) Date of publication:
**20.08.2025 Bulletin 2025/34**

(51) International Patent Classification (IPC):
**H04L 5/00** $^{(2006.01)}$

(21) Application number: **25158264.9**

(22) Date of filing: **17.02.2025**

(52) Cooperative Patent Classification (CPC):
**H04L 5/0016; H04L 5/0044**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.02.2024 US 202463554418 P
11.02.2025 US 202519050823**

(71) Applicant: **Samsung Electronics Co., Ltd.
Suwon-si, Gyeonggi-do 16677 (KR)**

(72) Inventors:
• **HOSSEINIAN, Seyed Mohsen
San Jose, CA, 95134 (US)**
• **SARTORI, Philippe Jean Marc Michel
San Jose, CA, 95134 (US)**

(74) Representative: **Kuhnen & Wacker
Patent- und Rechtsanwaltsbüro PartG mbB
Prinz-Ludwig-Straße 40A
85354 Freising (DE)**

(54) **METHODS AND SYSTEMS OF PUSCH MULTIPLEXING WITH PUSCH REPETITION**

(57) A system and a method of wireless communication are disclosed. The method includes the steps of scheduling a first user equipment, UE, to transmit a first physical uplink shared channel (PUSCH); applying an orthogonal cover code, OCC, multiplexing configuration to the first PUSCH; and transmitting, by the first UE, the first PUSCH to a network device.

```
┌─────────────────┐
│  Schedule UE to │
│  transmit PUSCH │
│       801       │
└────────┬────────┘
         │
         ▼
┌─────────────────┐
│   Apply an OCC  │
│   multiplexing  │
│ configuration to│
│    the PUSCH    │
│       802       │
└────────┬────────┘
         │
         ▼
┌─────────────────┐
│  Transmit the   │
│   PUSCH to a    │
│  network device │
│       803       │
└─────────────────┘
```

FIG. 8

**Description**

TECHNICAL FIELD

The disclosure generally relates to wireless communications technologies. More particularly, the subject matter disclosed herein relates to improvements in multiplexing methods for a physical uplink shared channel (PUSCH).

SUMMARY

The present application relates to the field of cellular networks (i.e., terrestrial and non-terrestrial network (NTN) communications), particularly focusing on enhancing uplink transmission capabilities in such networks. Systems, including various forms of PUSCH repetition like Type-A and Type-B, have been used to improve reliability of uplink communications. However, these methods consume uplink resources significantly, leading to reduced system capacity.
One issue with the above approach is that the repeated use of the same PUSCH on uplink resources, while enhancing signal reliability, often leads to a decrease in system capacity efficiency. This is particularly problematic in scenarios where network resources are limited, such as in early-phase deployments of NTN systems.
To overcome these types of issues, systems and methods are described herein for multiplexing multiple user equipments (UEs) over the same frequency resource blocks using orthogonal cover code (OCC) techniques. These systems and methods allow for PUSCH transmission repetition without the traditional trade-off between reliability and capacity. Specifically, these systems and methods introduce schemes, such as inter-slot and inter-symbol OCC, to efficiently multiplex PUSCH transmissions in both time and frequency domains.
The above-described approaches improve on previous methods by allowing for enhanced PUSCH transmission capacity without compromising on transmission reliability. By applying different OCCs to repeated PUSCH transmissions, the present disclosure facilitates higher system capacity while maintaining or even enhancing coverage and data transmission reliability in NTN scenarios.
In an embodiment, a method of wireless communication comprises scheduling a first UE to transmit a first PUSCH; applying an OCC multiplexing configuration to the first PUSCH; and transmitting, by the first UE, the first PUSCH to a network device.
In an embodiment, a wireless communication apparatus comprises a processor; a memory storing instructions that, when executed by the processor, cause the apparatus to schedule a first UE to transmit a first PUSCH, apply an OCC multiplexing configuration to the first PUSCH, and enable the first UE to transmit the first PUSCH to a network device.

BRIEF DESCRIPTION OF THE DRAWING

In the following section, the aspects of the subject matter disclosed herein will be described with reference to exemplary embodiments illustrated in the figures, in which:

FIG. 1 is a block diagram illustrating a plurality of UEs in a network environment, according to an embodiment;
FIG. 2A is a timing diagram illustrating PUSCH repetition, according to an embodiment;
FIG. 2B is a timing diagram illustrating two UEs set up for time domain PUSCH repetition, according to an embodiment;
FIG. 3 is a timing diagram illustrating four UEs set up for time domain PUSCH repetition, according to an embodiment;
FIG. 4 is a block diagram of inter-slot OCC for PUSCH repetition type-A, according to an embodiment;
FIG. 5 is a resource allocation diagram for inter-slot OCC with length 4 for PUSCH repetition type-A, according to an embodiment;
FIG. 6 is a resource allocation diagram for inter-symbol OCC with length 4 for PUSCH repetition type-B, according to an embodiment;
FIG. 7 is a resource allocation diagram for inter-symbol OCC with length 4 for PUSCH repetition type-B with alternative repetition, according to an embodiment;
FIG. 8 is a flowchart illustrating a wireless communication method, according to an embodiment;
FIG. 9 is a block diagram of an electronic device in a network environment, according to an embodiment; and
FIG. 10 shows a system including a UE and a network device, in communication with each other, according to an embodiment.

DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

"OCC" as used herein refers to a set of codes where each code sequence is mathematically orthogonal to the others, minimizing interference between them. Some examples of "OCCs" are Walsh codes, which are commonly used in code division multiple access (CDMA) and long term evolution (LTE) systems.

"OCC multiplexing configuration" as used herein refers to the specific arrangement and application of OCCs to manage and optimize the simultaneous transmission of multiple data streams within a communication system. Some examples of "OCC multiplexing configurations" are the use of specific OCC sequences to encode different data streams transmitting over the same frequency spectrum.

"Repetition type-A" as used herein refers to a method of signal repetition where each repeated signal segment is identical in duration and starts at the same point in each transmission slot. Some examples of "repetition type-A" are the consistent replication of an entire signal packet across multiple sequential slots without any alteration to the packet structure or timing.

"Repetition type-B" as used herein refers to a method of signal repetition where each repeated signal segment can vary in duration or starting point within the transmission slot. Some examples of "repetition type-B" are variations in the repeated segments' length or start times, tailored to dynamic network conditions or specific transmission requirements.

"Symbol" as used herein refers to a smallest unit of data in digital communications, which is modulated to convey information via changes in signal amplitude, phase, frequency, or a combination of these. Some examples of "symbols" are the individual pulses in a pulse amplitude modulated (PAM) system or the specific phase shifts in phase-shift keying (PSK).

"Slot" as used herein refers to a discrete time interval within which data transmission occurs in a wireless communication system. Some examples of "slots" are the specific intervals designated for sending bursts of data in time-division multiple access (TDMA) systems or the time frames used in LTE and fifth generation (5G) new radio (NR) scheduling.

"Frequency resource blocks" as used herein refer to the basic units of radio resources in a wireless communication network. These are fixed-size units of spectrum allocated for the transmission of signals in mobile communication systems. Some examples of "frequency resource blocks" are the 180 kilohertz (kHz) wide blocks used in LTE systems, where each block include 12 subcarriers spaced 15 kHz apart.

Throughout this description, various embodiments discuss uplink NTN capacity enhancement, however solutions disclosed herein are also applicable to cellular terrestrial networks, more generally wherever the concept of repetition is used in uplink for increasing the transmission reliability performance.

NTN satellites cover expansive areas, with the coverage radius of geosynchronous (GSO) satellites typically ranging from 200 kilometers (km) to 1000 km, and non-geostationary (NGSO) satellites covering areas between 100 km and 500 km. In such vast coverage zones, device density can be high, necessitating that a substantial number of UEs succeed in transmitting data during a satellite's pass. This may require both rapid access to and release from satellite resources, particularly in low earth orbit (LEO) scenarios where the number of UEs within coverage can be exceptionally large.

In some NR NTN deployments, the spectrum resources available can be particularly limited. Uplink transmissions from UEs, especially from handheld smartphones in power class 3 (i.e., with an output power of 23 decibels per milliwatt (dBm)), face a constrained transmission budget. To address this, it may be planned that uplink transmissions are allocated across a limited number of physical resource blocks (PRBs), such as one to six PRBs with a nominal subcarrier spacing of 15 kilohertz (kHz).

Release 18 enhancements can apply a PUSCH with a low data rate of 3 kilobytes per second (kbps) and voice over Internet protocol (IP) (VoIP) transmissions using adaptive multi-rate (AMR) at 4.75 kbps to meet the performance requirements for uplink data channel transmission in NTN environments. However, to achieve these or similar requirements, PUSCH coverage enhancement schemes for 5G NR Releases 15, 16, and 17 should be employed. Specifically, Release 15 introduces Type-A PUSCH repetition, Release 16 introduces Type-B PUSCH repetition, and various additional enhancement schemes are introduced in Release 17, such as joint channel estimation with demodulation reference signal (DMRS) bundling.

To fulfill the performance requirements for PUSCH transmissions in NTN scenarios, such as with handheld smartphones or Internet of Things (IoT) devices, employing PUSCH coverage enhancement techniques, such as Type-A or Type-B repetition, may be useful. These methods can effectively increase the reliability of PUSCH transmissions. However, they can also reduce the overall system capacity by consuming substantial uplink resources due to the repetitive transmission of the same PUSCH. This repetitive use can lead to decreased system capacity efficiency.

To address these challenges and enhance the uplink capacity for NTN, a series of solutions have been developed. These solutions may involve the multiplexing of multiple UEs over the same frequency resource blocks, thereby increasing the PUSCH transmission capacity. While a primary focus of these solutions may be on enhancing uplink capacity in NTN environments, they may also be applicable to cellular terrestrial networks, or in any scenario where repetition in uplink is employed to improve transmission reliability.

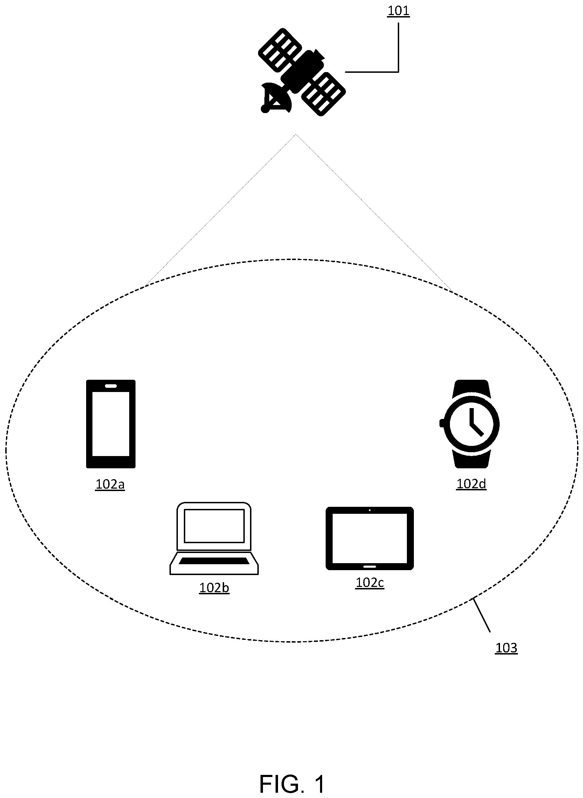

FIG. 1 is a block diagram illustrating a plurality of UEs in a network environment, according to an embodiment.

Referring to FIG. 1, a communication device 101 is shown as an NTN network device. As discussed above, other communication devices can be used, such as base stations or wireless signal transmitters. The communication device 101 may transmit communication signals over a given area 103 comprised of devices 102a, 102b, 102c, and 102d within that area. The area 103 may be representative of a frequency or wavelength RB. Each of the devices 102a-102d may be any electronic device capable of communication with the communication device 101.

Time-domain repetition of the PUSCH may enhance reception energy at the communication device 101, which can directly contribute to improved coverage. As mentioned above, Release 15 and Release 16 of the 5G standards introduced two types of PUSCH time-domain repetition: Type-A and Type-B.

As previously explained, in Type-A PUSCH repetition, both the starting symbol within the slot and the length of the PUSCH, which refers to the number of symbols, remain constant for each repetition. This consistent repetition pattern is designed to stabilize and enhance the reception quality over the designated slots. Conversely, Type-B PUSCH repetition allows for variability in either the starting symbol or the length of the PUSCH, or both, across different repetitions. This variability can be advantageous in dynamically adjusting to varying network conditions and enhancing system robustness.

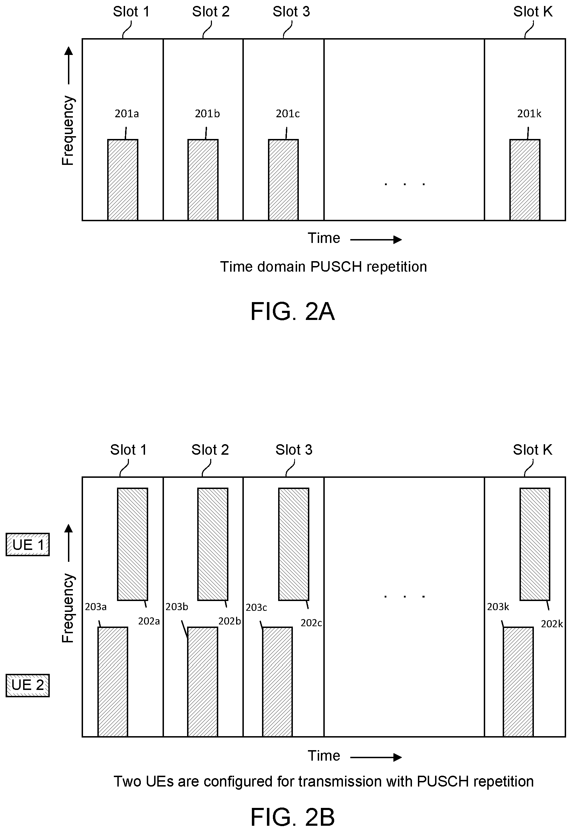

FIG. 2A is a timing diagram illustrating PUSCH repetition, according to an embodiment.

Referring to FIG. 2A, a schematic representation of Type-A PUSCH repetition across multiple time slots in a communication network is illustrated. The vertical axis represents frequency, indicating that each PUSCH transmission occupies a consistent frequency band across different repetitions. The horizontal axis represents time, divided into slots, with each slot including a repetition of PUSCH. These repetitions are sequentially labeled from 201a, 201b, 201c, to 201k (where k may be any value greater than 3), demonstrating a uniform and orderly sequence of transmissions. This visual arrangement illustrates the characteristics of Type-A PUSCH repetition, where both the start time within the slot and the duration of the PUSCH are identical for every cycle.

According to an embodiment, the network can configure multiple UEs for PUSCH repetition and schedule them simultaneously across different frequency resources.

FIG. 2B is a timing diagram illustrating two UEs set up for time domain PUSCH repetition, according to an embodiment.

Referring to FIG. 2B, the scheduling of PUSCH repetition for two UEs over multiple time slots within a specific frequency band is illustrated. Each column represents a distinct time slot, and the PUSCH transmissions for UE1 are labeled from 202a, 202b, 202c, to 202k (where k may be any value greater than 3). This labeling indicates that UE1 is repeating its PUSCH transmission across K time slots. In addition, the PUSCH transmissions for UE2 are labeled from 203a, 203b, 203c, to 203k (where k may be any value greater than c). This configuration can be extended by the network to provide similar scheduling to additional UEs across other available frequency resources as needed.

This strategy enhances coverage by boosting the received signal-to-noise ratio (SNR) at the gNodeB (gNB), but it decreases resource utilization efficiency, resulting in reduced system capacity.

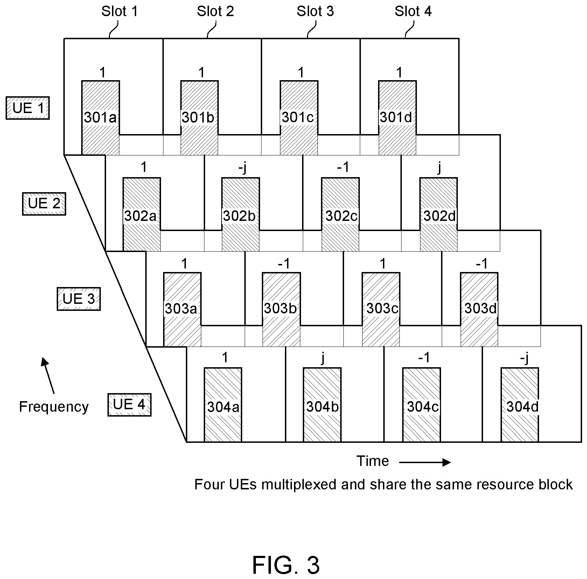

FIG. 3 is a timing diagram illustrating four UEs set up for time domain PUSCH repetition, according to an embodiment.

Referring to FIG. 3, the network configures and schedules UEs with PUSCH repetitions on the same frequency block, applying different OCCs to the PUSCH transmissions of the scheduled LTEs. In this case, LTE1, UE2, UE3, and UE4 each have a PUSCH repetition factor of four, meaning the PUSCH is repeated in the time domain across four slots for each UE, where each PUSCH is respectively labeled from 301a, 301b, 301c, 301d, 302a, 302b, 302c, 302d, 303a, 303b, 303c, 303d, and 304a, 304b, 304c, and 304d. The PUSCHs of these UEs are scheduled within the same frequency resource block, and each one is configured with a unique set of orthogonal codes, thereby allowing each UE to transmit a PUSCH using a distinct cover code. Specifically, as shown in FIG. 3, UE1 uses the code {1, 1, 1, 1}, UE2 uses {1, -j, -1, j}, UE3 uses {1, -1, 1, -1}, and UE4 uses {1, j, -1, -j}. Other sets of OCCs can also be used. These examples of OCC configurations highlight the adaptability of the approach, where any orthogonal or semi-orthogonal code set can be employed, such as Hadamard (Walsh) codes, which provide orthogonal sets for code lengths that are powers of two.

Accordingly, this approach achieves greater efficiency when the network coordinates PUSCH repetition across multiple UEs using the same redundancy version for each repeated transmission. Alternatively, the network can enhance efficiency by scheduling the PUSCH repetition for all UEs being multiplexed to follow the same redundancy version sequence.

In addition, according to various embodiments, different time-domain OCC configurations can be used.

According to an embodiment, an inter-slot time-domain OCC configuration can be used. In this case, the OCC may be applied across multiple slots within the time domain, making it particularly suited for PUSCH repetition type-A, where each repetition of the PUSCH within a slot is modified by an element from the OCC sequence. For example, an output from a discrete Fourier transform (DFT) precoding of each repetition may be multiplied by a corresponding element of the OCC sequence designated for that slot.

This multiplication, which may be exclusively applied to PUSCH resource elements, may enhance the integrity and effectiveness of the signal transmission over multiple slots. The mathematical formulation of this process is given by the Equation 1:

$$y\left(m N_{\text{RB}}^{\text{PUSCH}} N_{\text{sc}}^{\text{RB}} N_{\text{PUSCH}}^{\text{slot}} + n\right) = w_m x(n),$$

$$\dots \text{Equation 1}$$

where $m = 0, ... , N_{\text{slot}}^{\text{rep}} - 1, \quad n = 0, ... , N_{\text{RB}}^{\text{PUSCH}} N_{\text{sc}}^{\text{RB}} N_{\text{PUSCH}}^{\text{slot}} - 1, \quad N_{\text{PUSCH}}^{\text{slot}}$ is the number of PUSCH DFT-spread-orthogonal frequency-division multiplexing (OFDM) symbols per slot, $N_{\text{sc}}^{\text{RB}}$ is the number of subcarriers per

resource block, $N_{\text{RB}}^{\text{PUSCH}}$ is the number of resource blocks allocated for PUSCH transmission, and $N_{\text{slot}}^{\text{rep}}$ is the number of slots per repetition that the OCC sequence is applied to, which is equal to the length of the OCC sequence. This targeted approach ensures that each PUSCH transmission within the configured slots maintains distinct characteristics, which may enhance the clarity of the network communication.

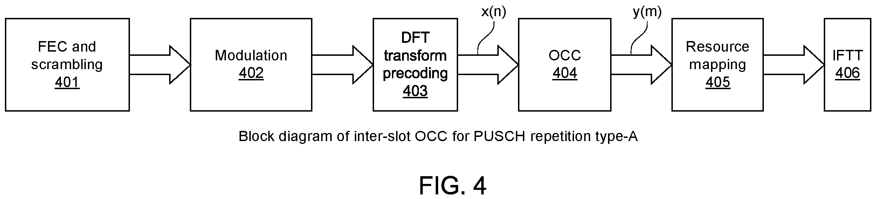

FIG. 4 is a block diagram of inter-slot OCC for PUSCH repetition type-A, according to an embodiment.

Referring to FIG. 4, the process begins at block 401 with forward error correction (FEC) and scrambling, where FEC is used to add redundancy to the data, enabling error detection and correction at the receiver, and scrambling is used to randomize the data to ensure a balanced spectrum.

At block 402, the scrambled data is modulated, converting it into a form suitable for transmission by assigning symbols to data bits according to the chosen modulation scheme. Following modulation, at block 403, a DFT is applied to the modulated data to prepare it for OFDM.

At block 404, the OCC is used to apply a specific coding sequence to the data, enhancing its robustness against interference and facilitating the distinction of different data streams within the same frequency band. After OCC processing, in the resource mapping block 405, the coded data is mapped to specific frequency-time resources in the transmission frame. At block 406, the inverse fast Fourier transform (IFFT) is used to convert the frequency-domain data back into the time domain, preparing it for transmission over the air.

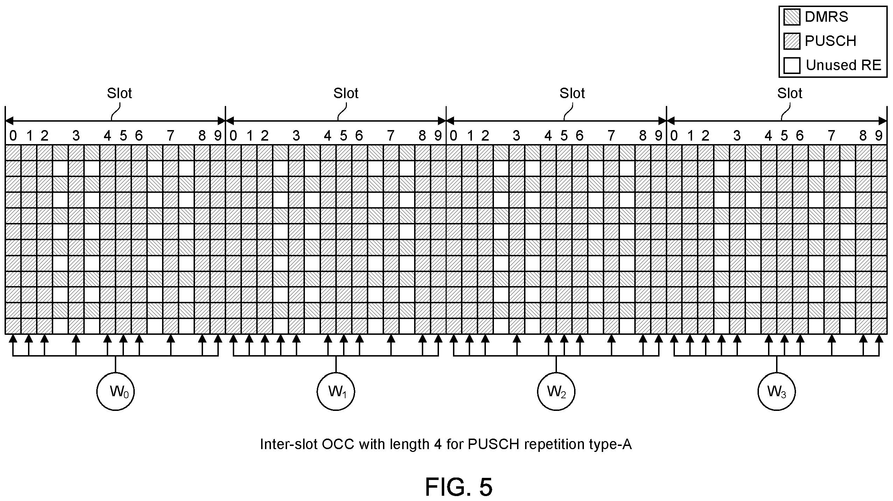

FIG. 5 is a resource allocation diagram for inter-slot OCC with length 4 for PUSCH repetition type-A, according to an embodiment.

Referring to FIG. 5, an OCC sequence is applied across four slots, with the sequence length and the number of slots for repetition both being $N_{slot}^{PUSCH}$. Each slot is composed of multiple squares corresponding to REs. The OCC sequence may be applied in such a manner that each element of the sequence multiplies all the REs within a slot, but only those REs that include PUSCH data are affected.

According to an embodiment, an inter-symbol time-domain OCC configuration can be used. In this case, OCC may be applied across multiple DFT-spread-OFDM symbols within the time domain, making it particularly suitable for PUSCH repetition type B, in which each repetition of a PUSCH configured as type-B occurs within individual DFT-spread-OFDM symbols across a single slot. Each of these repetitions may be multiplied with a specific element from the OCC sequence.

Multiplication by the orthogonal sequence $w_m$ may be performed according to Equation 2:

$$y\left(mN_{\text{RB}}^{\text{PUSCH}} N_{\text{sc}}^{\text{RB}} N_{\text{PUSCH}}^{\text{rep}} + n\right) = w_m x(n)$$

$$... \text{ Equation 2}$$

where $m = 0, ... , N_{\text{sym}}^{\text{rep}} - 1, \quad n = 0, ... , N_{\text{RB}}^{\text{PUSCH}} N_{\text{sc}}^{\text{RB}} N_{\text{PUSCH}}^{\text{rep}} - 1, \quad N_{\text{PUSCH}}^{\text{rep}}$ is the number of PUSCH DFT-spread-OFDM symbols per repetition, $N_{\text{sc}}^{\text{RB}}$ in the number of subcarriers per resource block, $N_{\text{RB}}^{\text{PUSCH}}$ is the

number of resource blocks allocated for PUSCH transmission, and $N_{\text{sym}}^{\text{rep}}$ is the number of PUSCH DFT-spread-OFDM symbols that the OCC sequence is applied to, which is equal to the length of the OCC sequence.

When employing inter-symbol time-domain OCC with PUSCH repetition type-B, the repetition of symbols should not extend beyond the boundaries of a slot.

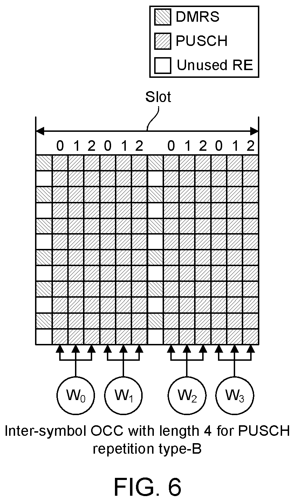

FIG. 6 is a resource allocation diagram for inter-symbol OCC with length 4 for PUSCH repetition type-B, according to an embodiment.

Referring to FIG. 6, an OCC sequence is applied across four slots. Each slot is composed of multiple squares corresponding to REs. A block including three DFT-s-OFDM symbols may be configured to repeat four times within a single slot.

Furthermore, the steps shown and explained in the block diagram of FIG. 4 with reference to the inter-slot OCC configuration may also be applicable to the inter-symbol OCC configuration.

According to an embodiment, the DFT-spread-OFDM symbols can be repeated within the same slot.

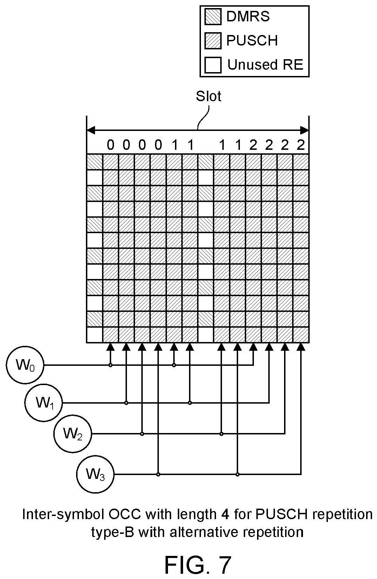

FIG. 7 is a resource allocation diagram for inter-symbol OCC with length 4 for PUSCH repetition type-B with alternative repetition, according to an embodiment.

Referring to FIG. 7, an OCC sequence is applied across four slots. Each slot is composed of multiple squares corresponding to REs. A single DFT-spread-OFDM symbol may be repeated consecutively in four sequential time-domain symbol locations within the same slot. This method allows for a continuous, back-to-back repetition of the same symbol.

According to an embodiment, an inter-transport block (TB) time domain OCC configuration can be used.

In this case, OCC can be applied in conjunction with TB over multiple slots (TBoMS). In this configuration, a UE may transmit a large TB across multiple slots. OCC can be used to enhance the repetition of this TB, which is transmitted repeatedly over the designated slots.

This approach may be similar to the method used in inter-slot time-domain OCC but can be adapted to handle larger data blocks that span multiple slots. OCC can be applied to the entire TB, rather than individual slots or symbols, ensuring that the entire data block benefits from the robustness and enhanced error resistance provided by OCC.

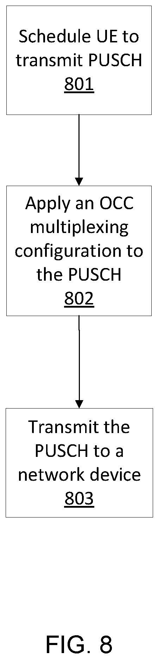

FIG. 8 is a flowchart illustrating a wireless communication method, according to an embodiment.

One or more of the steps shown in FIG. 8 may be performed by a network device (e.g., a satellite or base station), an electronic device, or any device capable of wireless network communication.

Referring to FIG. 8, in step 801, a UE is scheduled to transmit a PUSCH. This may involve the network dynamically allocating necessary resources based on the current network load and the quality of service requirements of the UE.

In step 802, an OCC multiplexing configuration is applied to the PUSCH. This may improve the signal integrity by utilizing OCCs to differentiate between signals from multiple UEs sharing the same frequency spectrum, thus reducing the probability of signal interference and increasing the robustness of the data transmission.

In step 803, the UE transmits the PUSCH to a network device. This transmission may include sending data from the UE through the allocated frequency resources to the network, where it is received and processed.

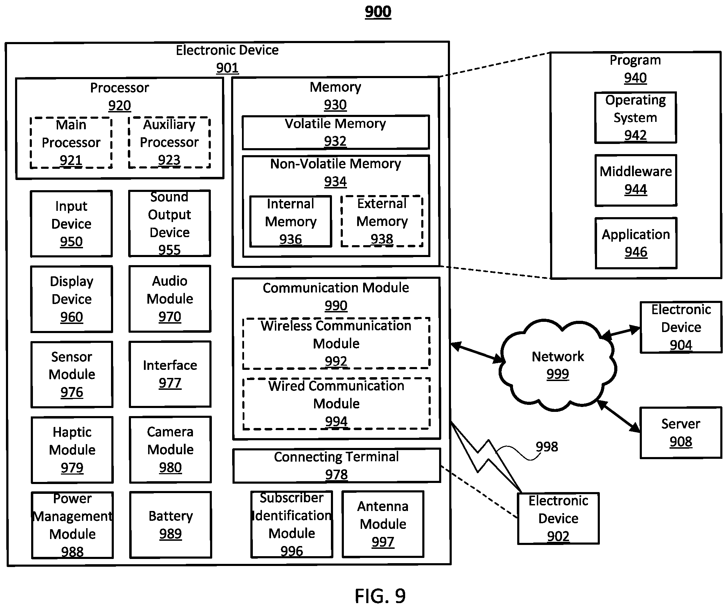

FIG. 9 is a block diagram of an electronic device in a network environment, according to an embodiment.

In the embodiment depicted in FIG. 9 of the network environment 900, an electronic device 901 may be capable of implementing the previously described methods of wireless communication, specifically those involving the transmission and processing of the PUSCH with OCC multiplexing configurations. This device is equipped with a comprehensive set of modules and components that support the functionalities required for such advanced communication techniques.

The processor 920, which may comprise both a main processor 921 and an auxiliary processor 923, may handle data processing tasks for executing the method claims. The main processor 921 may facilitate the general processing required for scheduling and transmitting PUSCH, while the auxiliary processor 923, which may include specialized processors that can efficiently handle specific tasks such as OCC application or managing communication protocols, thereby optimizing power consumption and performance during these operations.

The communication module 990 in electronic device 901 may enable the device to connect and transmit data over networks 998 and 999, supporting both short-range and long-range wireless communication capabilities.

Furthermore, the memory components, including volatile memory 932 and non-volatile memory 934, may be used for the temporary and permanent storage of data and instructions related to the OCC multiplexing configurations and PUSCH transmission schedules. These memory units may store the programs and data that the processor 920 utilizes to execute the wireless communication methods, ensuring that all necessary computational instructions and data can be efficiently accessed and processed.

Referring to FIG. 9, an electronic device 901 in a network environment 900 may communicate with an electronic device 902 via a first network 998 (e.g., a short-range wireless communication network), or an electronic device 904 or a server 908 via a second network 999 (e.g., a long-range wireless communication network). The electronic device 901 may communicate with the electronic device 904 via the server 908. The electronic device 901 may include a processor 920, a memory 930, an input device 950, a sound output device 955, a display device 960, an audio module 970, a sensor module 976, an interface 977, a haptic module 979, a camera module 980, a power management module 988, a battery 989, a communication module 990, a subscriber identification module (SIM) card 996, or an antenna module 997. **In** one embodiment, at least one (e.g., the display device 960 or the camera module 980) of the components may be omitted from the electronic device 901, or one or more other components may be added to the electronic device 901. Some of the components may be implemented as a single integrated circuit (IC). For example, the sensor module 976 (e.g., a fingerprint sensor, an iris sensor, or an illuminance sensor) may be embedded in the display device 960 (e.g., a display).

The processor 920 may execute software (e.g., a program 940) to control at least one other component (e.g., a hardware or a software component) of the electronic device 901 coupled with the processor 920 and may perform various data processing or computations.

As at least part of the data processing or computations, the processor 920 may load a command or data received from another component (e.g., the sensor module 976 or the communication module 990) in volatile memory 932, process the command or the data stored in the volatile memory 932, and store resulting data in non-volatile memory 934. The processor 920 may include a main processor 921 (e.g., a central processing unit (CPU) or an application processor (AP)), and an auxiliary processor 923 (e.g., a graphics processing unit (GPU), an image signal processor (ISP), a sensor hub processor, or a communication processor (CP)) that is operable independently from, or in conjunction with, the main processor 921. Additionally or alternatively, the auxiliary processor 923 may be adapted to consume less power than the main processor 921, or execute a particular function. The auxiliary processor 923 may be implemented as being separate from, or a part of, the main processor 921.

The auxiliary processor 923 may control at least some of the functions or states related to at least one component (e.g., the display device 960, the sensor module 976, or the communication module 990) among the components of the electronic device 901, instead of the main processor 921 while the main processor 921 is in an inactive (e.g., sleep) state, or together with the main processor 921 while the main processor 921 is in an active state (e.g., executing an application). The auxiliary processor 923 (e.g., an image signal processor or a communication processor) may be implemented as part of another component (e.g., the camera module 980 or the communication module 990) functionally related to the auxiliary processor 923.

The memory 930 may store various data used by at least one component (e.g., the processor 920 or the sensor module 976) of the electronic device 901. The various data may include, for example, software (e.g., the program 940) and input data or output data for a command related thereto. The memory 930 may include the volatile memory 932 or the non-volatile memory 934. Non-volatile memory 934 may include internal memory 936 and/or external memory 938.

The program 940 may be stored in the memory 930 as software, and may include, for example, an operating system (OS) 942, middleware 944, or an application 946.

The input device 950 may receive a command or data to be used by another component (e.g., the processor 920) of the electronic device 901, from the outside (e.g., a user) of the electronic device 901. The input device 950 may include, for example, a microphone, a mouse, or a keyboard.

The sound output device 955 may output sound signals to the outside of the electronic device 901. The sound output device 955 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 960 may visually provide information to the outside (e.g., a user) of the electronic device 901. The display device 960 may include, for example, a display, a hologram device, or a projector and control circuitry to control a corresponding one of the display, hologram device, and projector. The display device 960 may include touch circuitry adapted to detect a touch, or sensor circuitry (e.g., a pressure sensor) adapted to measure the intensity of force incurred by the touch.

The audio module 970 may convert a sound into an electrical signal and vice versa. The audio module 970 may obtain the sound via the input device 950 or output the sound via the sound output device 955 or a headphone of an external electronic device 902 directly (e.g., wired) or wirelessly coupled with the electronic device 901.

The sensor module 976 may detect an operational state (e.g., power or temperature) of the electronic device 901 or an environmental state (e.g., a state of a user) external to the electronic device 901, and then generate an electrical signal or data value corresponding to the detected state. The sensor module 976 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 977 may support one or more specified protocols to be used for the electronic device 901 to be coupled with the external electronic device 902 directly (e.g., wired) or wirelessly. The interface 977 may include, for example, a high- definition multimedia interface (HDMI), a universal serial bus (USB) interface, a secure digital (SD) card interface, or an audio interface.

A connecting terminal 978 may include a connector via which the electronic device 901 may be physically connected with the external electronic device 902. The connecting terminal 978 may include, for example, an HDMI connector, a USB connector, an SD card connector, or an audio connector (e.g., a headphone connector).

The haptic module 979 may convert an electrical signal into a mechanical stimulus (e.g., a vibration or a movement) or an electrical stimulus which may be recognized by a user via tactile sensation or kinesthetic sensation. The haptic module 979 may include, for example, a motor, a piezoelectric element, or an electrical stimulator.

The camera module 980 may capture a still image or moving images. The camera module 980 may include one or more lenses, image sensors, image signal processors, or flashes. The power management module 988 may manage power supplied to the electronic device 901. The power management module 988 may be implemented as at least part of, for example, a power management integrated circuit (PMIC).

The battery 989 may supply power to at least one component of the electronic device 901. The battery 989 may include, for example, a primary cell which is not rechargeable, a secondary cell which is rechargeable, or a fuel cell.

The communication module 990 may support establishing a direct (e.g., wired) communication channel or a wireless communication channel between the electronic device 901 and the external electronic device (e.g., the electronic device 902, the electronic device 904, or the server 908) and performing communication via the established communication channel. The communication module 990 may include one or more communication processors that are operable independently from the processor 920 (e.g., the AP) and supports a direct (e.g., wired) communication or a wireless communication. The communication module 990 may include a wireless communication module 992 (e.g., a cellular communication module, a short-range wireless communication module, or a global navigation satellite system (GNSS) communication module) or a wired communication module 994 (e.g., a local area network (LAN) communication module or a power line communication (PLC) module). A corresponding one of these communication modules may communicate with the external electronic device via the first network 998 (e.g., a short-range communication network, such as BLUETOOTH™, wireless-fidelity (Wi-Fi) direct, or a standard of the Infrared Data Association (IrDA)) or the second network 999 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 992 may identify and authenticate the electronic device 901 in a communication network, such as the first network 998 or the second network 999, using subscriber information (e.g., international mobile subscriber identity (IMSI)) stored in the subscriber identification module 996.

The antenna module 997 may transmit or receive a signal or power to or from the outside (e.g., the external electronic device) of the electronic device 901. The antenna module 997 may include one or more antennas, and, therefrom, at least one antenna appropriate for a communication scheme used in the communication network, such as the first network 998 or the second network 999, may be selected, for example, by the communication module 990 (e.g., the wireless communication module 992). The signal or the power may then be transmitted or received between the communication module 990 and the external electronic device via the selected at least one antenna.

Commands or data may be transmitted or received between the electronic device 901 and the external electronic device 904 via the server 908 coupled with the second network 999. Each of the electronic devices 902 and 904 may be a device of a same type as, or a different type, from the electronic device 901. All or some of operations to be executed at the electronic device 901 may be executed at one or more of the external electronic devices 902, 904, or 908. For example, if the electronic device 901 should perform a function or a service automatically, or in response to a request from a user or another device, the electronic device 901, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 901. The electronic device 901 may provide the outcome, with or without further processing of the outcome, as at least part of a reply to the request. To that end, a cloud computing, distributed computing, or client-server computing technology may be used, for example.

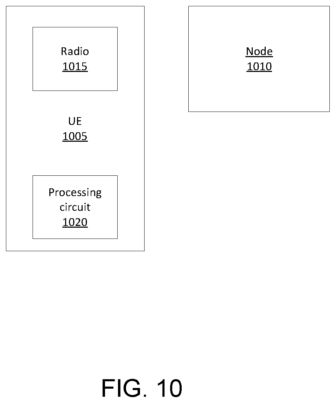

FIG. 10 shows a system including a UE and a network device, in communication with each other, according to an embodiment.

Referring to FIG. 10, the UE may include a radio 1015 and a processing circuit (or a means for processing) 1020, which may perform various methods disclosed herein, e.g., the method illustrated in FIG. 9. For example, the processing circuit 1020 may receive, via the radio 1015, transmissions from the network node (NTN or gNB) 1010, and the processing circuit 1020 may transmit, via the radio 1015, signals to the gNB 1010.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of, data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

**Claims**

1. A method of wireless communication, comprising:

   scheduling a first user equipment, UE, to transmit a first physical uplink shared channel, PUSCH;
   applying an orthogonal cover code, OCC, multiplexing configuration to the first PUSCH; and
   transmitting, by the first UE, the first PUSCH to a network device.

2. The method of Claim 1, wherein scheduling the first UE to transmit the first PUSCH further comprises scheduling the first UE using repetition type-A in a time domain across multiple slots.

3. The method of Claim 1, wherein scheduling the first UE to transmit the first PUSCH further comprises scheduling the first UE using repetition type-B in a time domain across multiple symbols.

4. The method of any one of Claims 1 to 3, further comprising scheduling a second UE to transmit a second PUSCH; and applying the OCC multiplexing configuration to the second PUSCH.

5. The method of Claim 4, wherein the first PUSCH and the second PUSCH are scheduled in a same slot in a time domain.

6. The method of Claim 4 or 5, wherein the first PUSCH is scheduled in a first slot in a time domain, and the second PUSCH is scheduled in a second slot in the time domain.

7. The method of any one of Claims 1 to 6, wherein applying the OCC multiplexing configuration to the first PUSCH further comprises applying the OCC multiplexing configuration in a time domain across symbols or slots.

8. The method of Claim 7, wherein a length of the OCC multiplexing configuration is four or less symbols or slots.

9. The method of any one of Claims 1 to 8, wherein applying the OCC multiplexing configuration to the first PUSCH further comprises applying the OCC multiplexing configuration according to a predefined rule or during a dynamic grant.

10. The method of any one of Claims 1 to 9, wherein the OCC multiplexing configuration is applied to multiple slots carrying a transport block.

11. A wireless communication apparatus comprising:

    a processor; and
    a memory storing instructions that, when executed by the processor, cause the apparatus to:

schedule a first user equipment, UE, to transmit a first physical uplink shared channel, PUSCH,
apply an orthogonal cover code. OCC. multiplexing configuration to the first PUSCH, and
enable the first UE to transmit the first PUSCH to a network device.

12. The apparatus of Claim 11, wherein the instructions further cause the apparatus to schedule the first UE using repetition type-A in a time domain across multiple slots.

13. The apparatus of Claim 11, wherein the instructions further cause the apparatus to schedule the first UE using repetition type-B in a time domain across multiple symbols.

14. The apparatus of any one of Claims 11 to 13, wherein the instructions further cause the apparatus to:

schedule a second UE to transmit a second PUSCH, and
apply the OCC multiplexing configuration to the second PUSCH.

15. The apparatus of Claim 14, wherein the first PUSCH and the second PUSCH are scheduled in a same slot in a time domain.

FIG. 1

Time domain PUSCH repetition

FIG. 2A

Two UEs are configured for transmission with PUSCH repetition

FIG. 2B

Four UEs multiplexed and share the same resource block

FIG. 3

FEC and scrambling 401 → Modulation 402 → DFT transform precoding 403 →(x(n))→ OCC 404 →(y(m))→ Resource mapping 405 → IFTT 406

Block diagram of inter-slot OCC for PUSCH repetition type-A

FIG. 4

Inter-slot OCC with length 4 for PUSCH repetition type-A

FIG. 5

EP 4 604 440 A1

Inter-symbol OCC with length 4 for PUSCH
repetition type-B

# FIG. 6

Inter-symbol OCC with length 4 for PUSCH repetition
type-B with alternative repetition

FIG. 7

Schedule UE to
transmit PUSCH
801

Apply an OCC
multiplexing
configuration to
the PUSCH
802

Transmit the
PUSCH to a
network device
803

FIG. 8

**900**

FIG. 9

Radio
1015

UE
1005

Processing
circuit
1020

Node
1010

FIG. 10

| | Europäisches Patentamt European Patent Office Office européen des brevets | **EUROPEAN SEARCH REPORT** | **Application Number** EP 25 15 8264 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NTT DOCOMO ET AL: "Views on coverage enhancement WID scope", 3GPP DRAFT; RP-202527, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. e-Meeting; 20201207 - 20201211 30 November 2020 (2020-11-30), XP051963081, Retrieved from the Internet: URL:https://ftp.3gpp.org/tsg_ran/TSG_RAN/T SGR_90e/Docs/RP-202527.zip [retrieved on 2020-11-30] * Section 6 * * Section 6.1 * ----- | 1-15 | INV. H04L5/00 |
| X | JP 2023 547790 A (PANASONIC INTELECTUAL PROPERTY CORPORATION OF AMERICA) 14 November 2023 (2023-11-14) * paragraph [0002] * * paragraph [0005] * * paragraph [0006] * ----- | 1-15 | TECHNICAL FIELDS SEARCHED (IPC) H04L |

The present search report has been drawn up for all claims

| Place of search | Date of completion of the search | Examiner |
|---|---|---|
| The Hague | 11 July 2025 | Tavakol, Vahid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 8264

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2025

| Patent document cited in search report | Publication date | Patent family member(s) | Publication date |
|---|---|---|---|
| JP 2023547790 A | 14-11-2023 | EP 4233184 A1 | 30-08-2023 |
| | | JP 2023547790 A | 14-11-2023 |
| | | KR 20230093259 A | 27-06-2023 |
| | | US 2023412238 A1 | 21-12-2023 |
| | | WO 2022086437 A1 | 28-04-2022 |

EPO FORM P0459

For more details about this annex : see Official Journal of the European Patent Office, No. 12/82